# EUROPÄISCHE PATENTSCHRIFT

(11) **EP 2 116 513 B1**
(45) Veröffentlichungstag und Bekanntmachung des Hinweises auf die Patenterteilung: **05.07.2017**
(21) Anmeldenummer: 08103837.4
(22) Anmeldetag: 06.05.2008
(51) Int. Cl.: C01G 15/00, C01G 19/00

(54) **VERFAHREN ZUR HERSTELLUNG EINES OBERFLÄCHENMODIFIZIERTEN AGGLOMERATES VON INDIUMZINNOXID, DAS NACH DIESEM VERFAHREN ERHÄLTLICHE OBERFLÄCHENMODIFIZIERTE AGGLOMERAT SELBST, SOWIE EINE BESCHICHTUNGSMASSE HIERMIT**
PROCESS FOR PREPARING A SURFACE MODIFIED INDIUM TIN OXIDE AGGLOMERATE, THE AGGLOMERATE OBTAINED BY THE SAID PROCESS AND A COATING COMPOSITION COMPRISING SAID AGGLOMERATE.
PROCÉDÉ DE PRÉPARATION D'UN AGGLOMÉRAT D'OXYDE D'ÉTAIN ET D'INDIUM, L'AGGLOMÉRAT OBTENUE PAR LEDIT PROCÉDÉ ET COMPOSITION DE REVÊTEMENT COMPRENANT LEDIT AGGLOMÉRAT.

(43) Veröffentlichungstag der Anmeldung: 11.11.2009
(73) Patentinhaber: Evonik Degussa GmbH, 45128 Essen (DE)
(72) Erfinder: Hill, Sven, Dr., 63741 Aschaffenburg (DE); Wombacher, Willibald, 63867 Johannesberg (DE); Dauth, Katharina, 63073 Offenbach (DE)

(56) Entgegenhaltungen:
- WO-A-00/14017
- WO-A-2004/080144
- GOEBBERT C ET AL: "TRANSPARENT CONDUCTING COATINGS MADE FROM REDISPERSABLE CRYSTALLINE NANOSCALED POWDERS" MATERIALS RESEARCH SOCIETY SYMPOSIUM PROCEEDINGS, MATERIALS RESEARCH SOCIETY, PITTSBURG, PA, Bd. 574, 1. Januar 1999 (1999-01-01), Seiten 199-204, XP000866578 ISSN: 0272-9172

## Beschreibung

Die Erfindung betrifft ein Verfahren zur Herstellung eines oberflächenmodifizierten Agglomerates von Indiumzinnoxid, das nach diesem Verfahren erhältliche oberflächenmodifizierte Agglomerat von Indiumzinnoxid und eine Beschichtungsmasse hiermit.

Indiumzinnoxid-Schichten zeichnen sich aus durch hohe Transparenz, hohe elektrische Leitfähigkeit und hohes IR-Absorptionsvermögen. Solche Schichten können beispielsweise durch Sputterverfahren erzeugt werden oder durch Aufbringen von Indiumzinnoxid-Pulver in Form von Dispersionen.

Zur Herstellung der Indiumzinnoxidpulver sind verschiedene Verfahren bekannt: (Co)-Fällungsverfahren, hydrothermale Verfahren, Sol-Gel-Verfahren, Plasma-Verfahren oder pyrogene Verfahren.

In US5818810 wird ein ITO-Pulver offenbart welches auf der xy-Farbskala x-Werte von 0,220 bis 0,295 und y-Werte von0,235 bis 0,352 aufweist und welches eine Gitterkonstante von 10,110 bis 10,160 Angström aufweist. Es kann erhalten werden, indem man eine Zinn- und Indiumverbindungen enthaltende Lösung in Gegenwart von Ammoniumcarbonat fällt, den Niederschlag abtrennt und trocknet und bei Temperaturen von 450 bis 750°C in einer reduzierenden Atmosphäre calciniert.

In DE-A-19650747 wird ein ITO-Pulver mit einer Teilchengröße von 0,05 bis 1 µm und einem Halogengehalt von weniger als 0,2 Gew.-%. Es kann erhalten werden, indem man den pH-Wert einer Lösung von Indium- und Zinnsalzen mit Alkali auf pH-Werte von 4 bis 6 einstellt, den gebildeten Niederschlag abtrennt, trocknet und bei Temperaturen von 600 bis 1200°C, gegebenenfalls in einer reduzierenden Atmosphäre, calciniert. Nachteilig bei diesem Pulver ist die geringe Transparenz von beschichteten Substraten.

In EP-A-921099 wird ein Verfahren offenbart, welches die Neutralisation einer Lösung, welche Indiumsalz und ein Zinnsalz enthält, mit Ammoniak, abtrennen und Trocknen des Niederschlages und nachfolgende Calcinierung, zunächst an Luft bei 550 bis 700°C, dann unter reduzierenden Bedingungen bei 350 bis 450°C. Da so erhaltene ITO-Pulver weist eine Korund-Kristallstruktur, mit einer Dichte von nicht weniger als 6,5 g·cm⁻³, einer Gründichte von nicht weniger als 3,0 g·cm⁻³ und einem Seebeck-Koeffizienten von weniger als 30 µV·cm⁻³ bei 20°C und weniger als 80 µV·cm⁻³ nach Erhitzen auf 200°C hat. Wesentlich bei der Herstellung des Pulvers ist die Einhaltung des pH-Wertes im Bereich 6,8 bis 7,5 und einer Temperatur von 350 bis 450°C bei der Calcinierung.

In WO0014017 wird ein Verfahren zur Herstellung von Suspensionen und Pulvern auf Basis eines oberflächenmodifizierten ITO offenbart, bei dem durch Co-Fällung von Indium- und Zinn-Verbindungen in Gegenwart oberflächenmodifizierender Komponenten ausfällt, das erhaltene Pulver nach Entfernung des Lösungsmittels calciniert, nach dem Calcinieren eine oder mehrere oberflächenmodifizierende Komponenten und ein oder mehrere Lösungsmittel zugibt, die erhaltene Mischung einer Zerkleinerungs- oder Dispergierbehandlung unter Bildung einer Dispersion unterwirft und gegebenenfalls flüssige Komponenten aus der Suspension abtrennt, um ein Pulver zu erhalten. Als oberflächenmodifizierende Komponenten können Mono- oder Polycarbonsäuren, Diketone, Aminosäuren, Polyethylenoxidderivate, Amine oder Säureamide oder Mischungen aus zwei oder mehreren dieser Komponenten eingesetzt werden.

In WO2004/000594 wird ein Verfahren zur Herstellung eines ITO-Pulvers offenbart, bei dem man das über einen Cofällungsprozess, bei dem lösliche Indium- und Zinnkomponenten durch pH-Wert Erhöhung gefällt werden, erhaltene Produkt trocknet, zur Überführung in die kristalline Phase bei 300°C unter normaler Luftatmosphäre behandelt und nachfolgend unter Formiergas bei 300°C nachtempert. Die erhaltenen ITO-Pulver weisen auf der xy-Farbskala Werte von x = 0,294 bis 0,414 und y-Werte von y = 0,332 bis 0,421 auf.

Die bekannten Cofällungsverfahren führen zu Produkten, die bezüglich Transparenz, elektrischer Leitfähigkeit und IR-Absorptionsvermögen Defizite aufweisen. Aufgabe der vorliegenden Erfindung war es daher ein Verfahren bereitzustellen, welches zu einem ITO-Pulver mit besseren Eigenschaften führt.

### Definitionen

Unter einem Agglomerat gemäß der Erfindung sind durch Kohäsion zusammengehaltene Primärpartikel zu verstehen. Die erhaltenen räumlichen Strukturen sind als solche handhabbar, zerfallen bei Einwirkung von Scherenergie in voneinander isolierte Primärpartikel. Darüber hinaus ist es möglich, dass die Agglomerate gemäß der Erfindung auch einen geringen Anteil, kleiner als 8%, in der Regel kleiner als 5%, fest miteinander verbundener Primärpartikel enthalten. Die Anzahl fest verbundener Primärpartikel beträgt in der Regel 2 bis 10. Die Agglomerate können gemäß der Erfindung durch Sprühtrocknung erhalten werden. Gewöhnlich weist ein Agglomerat einen mittleren Agglomeratdurchmesser von 5 bis 50 µm auf.

Unter vollständig oder weitestgehend vollständig voneinander isolierten Primärpartikeln ist gemäß der Erfindung ein Pulver zu verstehen. Falls fest miteinander verbundenen Primärpartikel vorliegen, so ist die Anzahl der fest miteinander verbunden Primärpartikel in der Regel 2 bis 10 beschränkt. Der mittlere Primärpartikeldurchmesser kann 2 bis 50 nm betragen. Gemäß der Erfindung kann das Pulver durch Einwirkung von Scherkräften aus einem Agglomerat erhalten werden.

Unter einem Indium-Zinn-Oxohydrat sind im wesentlichen röntgenamorphe Partikel zu verstehen. Das Oxohydrat kann geringe Anteile kristalliner Verbindungen enthalten. Das Indium-Zinn-Oxohydrat der vorliegenden Erfindung kann durch eine spezielle thermische Behandlung in ein Indiumzinnoxid überführt werden, das überwiegend oder vollständig aus kubischem Indiumzinnoxid besteht.

Bei dem Indiumzinnoxid handelt es sich im wesentlichen um ein Mischoxid von Indium und Zinn. Indium und Zinn können darin in einer oder in verschiedenen Oxidationsstufen vorliegen. Beispielsweise liegen In(+I) und/oder In(+III) sowie Sn(+II) und/oder Sn(+IV) vor. Sn liegt bevorzugt als Sn(+IV) vor. Gegebenenfalls können Indium und Zinn auch teilweise als In(0) oder Sn(0) vorliegen.

Bei dem Indiumzinnoxid handelt es sich um ein zinndotiertes Indiumoxid, d. h. der Anteil an Zinnoxid ist geringer als der Anteil an Indiumoxid. Der Anteil an Zinn, bezogen auf die Summe von Indium, gerechnet als In, und Zinn, gerechnet als Sn, beträgt beispielsweise 2 bis 20 Gew.-%. Das Indiumzinnoxid der vorliegenden Erfindung weist als kristalline Phase überwiegend oder vollständig kubisches Indiumzinnoxid auf.

Das Indium-Zinn-Oxohydrat und das Indiumzinnoxid gemäß der Erfindung können Verunreinigungen enthalten. Der akzeptierbare Grad hängt vom Verwendungszweck ab. Über die Edukte kann beispielsweise SO₄²⁻, Co, Cu, Fe, Ni, Pb, Zn, K oder Na enthalten sein. Durch Verwendung reiner Edukte können SO₄²⁻, Ca, Co, Cu, Fe, Ni, Pb und Zn auf unter 0,005 Gew.-% und Na, K auf unter 0,01 Gew. % gebracht werden. Über das Verfahren eingebrachte Verbindungen, beispielsweise NH₄⁺ und Cl⁻ können falls erforderlich praktisch vollständig entfernt werden.

In der Regel sind weniger als 1 Gew.-% Verunreinigungen bezogen auf das oberflächenmodifizierte Indium-Zinn-Oxohydrat und Indiumzinnoxid vorhanden.

Unter Oberflächenmodifizierung ist zu verstehen, dass organische Moleküle und/oder Bruchstücke solcher Moleküle, die in der Regel nicht mehr als insgesamt 24, insbesondere nicht mehr als insgesamt 18 und besonders bevorzugt nicht mehr als 12 Kohlenstoffatome aufweisen, die über eine kovalente oder ionische Bindung und/oder polare (Dipol-Dipol-Wechselwirkung) oder van-der-Waals-Kräfte an die Partikeloberfläche gebunden sind. Bruchstücke können beispielsweise durch einen teilweisen thermischen Abbau der organischen Moleküle entstehen. In der vorliegenden Erfindung wird die Oberflächenmodifizierung durch den Anteil an Kohlenstoff ausgedrückt.

Ein erster Gegenstand der Erfindung ist ein Verfahren zur Herstellung eines oberflächenmodifizierten Agglomerates von Indiumzinnoxid, bei dem man
a) eine wässerige Lösung, welche Indium- und Zinn-Verbindungen und ein oder mehrere oberflächenmodifizierende Komponenten enthält, auf einen pH-Wert von 3,5 bis 4,5 einstellt, von gelösten Reaktionsprodukten und nicht umgesetzten Einsatzstoffen des Reaktionsgemisches abtrennt und die erhaltene Dispersion einer Sprühtrocknung unterzieht, wobei die oberflächenmodifizierende Komponenten aus der Gruppe bestehend aus
   a1) einer gesättigten oder ungesättigten Monocarbonsäure und Polycarbonsäure mit 1 bis 24 Kohlenstoffatomen,
   a2) einem Monoamin der allgemeinen Formel R₃₋ₙNHₙ, worin n = 0, 1 oder 2 ist und die Reste R unabhängig voneinander Alkylgruppen mit 1 bis 12 Kohlenstoffatomen darstellen,
   a3) Caprolactam, ß-Alanin, Glycin, Valin, Aminocapronsäure, Leucin und Isoleucin ausgewählt wird und
b) das erhaltene Produkt bei Temperaturen von mehr als 150°C und weniger als 310°C an der Luft trocknet und nachfolgend unter reduzierenden Bedingungen calciniert, wobei man die Calcinierung
   b1) zunächst bei Temperaturen von 240°C bis 260°C unter reduzierenden Bedingungen durchführt,
   b2) das Agglomerat auf Raumtemperatur abkühlt, an der Luft lagert und nachfolgend
   b3) bei Temperaturen von 270°C bis 310°C unter reduzierenden Bedingungen behandelt.

Geeignete Indiumverbindungen sind Indiumchlorid, Indiumiodid, Indiumnitrat, Indiumacetat, Indiumsulfat, Indiumalkoxide, wie Indiummethoxid oder Indiumethoxid, oder Mischungen davon, wobei Indium in der Oxidationsstufe +3 oder beim Chlorid und Iodid auch in der Oxidationsstufe +1 vorliegt.

Geeignete Zinnverbindungen sind Zinnchlorid, Zinnsulfat, Zinnalkoxide, wie Zinnmethoxid oder Zinnethoxid, oder Mischungen davon, wobei Zinn in der Oxidationsstufe +2 oder +4 vorliegt.

Bevorzugt können Gemische von Indiumtrichlorid (InCl₃) und Zinnchlorid (SnCl₂) eingesetzt werden.

Geeignete, zur Oberflächenmodifizierung eingesetzte gesättigte oder ungesättigte Mono -und Polycarbonsäuren (vorzugsweise Monocarbonsäuren) mit 1 bis 24 Kohlenstoffatomen sind zum Beispiel Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure, Fumarsäure, Itaconsäure, Stearinsäure und insbesondere 3,6,9-Trioxadecansäure sowie die entsprechenden Anhydride;

Geeignete, zur Oberflächenmodifizierung eingesetzte Mono- und Polyamine sind insbesondere solche der allgemeinen Formel R₃₋ₙNHₙ, worin n = 0, 1 oder 2 ist und die Reste R unabhängig voneinander Alkylgruppen mit 1 bis 12, insbesondere 1 bis 6 und besonders bevorzugt 1 bis 4 Kohlenstoffatomen darstellen, beispielsweise Methyl, Ethyl, n-und i-Propyl und Butyl.

Die oberflächenmodifizierenden Komponenten können einzeln oder als Mischung eingesetzt werden. Besonders bevorzugte Verbindungen sind 3,6,9-Trioxadecansäure, ß-Alanin und Caprolactam.

Der Anteil der eingesetzten oberflächenmodifizierenden Komponente beträgt, bezogen auf die Summe der eingesetzten Indium- und Zinnverbindung, bevorzugt 2 bis 30 Gew.-%, besonders bevorzugt 2 bis 6 Gew.-%.

Der pH-Wert im Bereich von 3,5 bis 4,5 kann beispielsweise durch primäre, sekundäre, tertiäre aliphatische oder aromatische Amine, Tetramethylammoniumhydroxid, NaOH, KOH, Ammoniak, Ammoniumhydroxid oder Mischungen davon eingestellt werden. Besonders bevorzugt wird Ammoniumhydroxid eingesetzt. Es hat sich als vorteilhaft erwiesen, das Reaktionsgemisch 1 bis 24 Stunden in diesem pH-Wertebereich zu belassen. Anschließend ist es vorteilhaft einen pH-Wert von 9 bis 9,5 einzustellen. Dies kann durch die gleichen Verbindungen erfolgen, die auch bei der Einstellung auf den pH-Wertebereich von 3,5 bis 4,5 eingesetzt wurden.

Vorteilhafterweise werden die bei der Reaktion erzeugten Salze aus dem Reaktionsgemisch abgetrennt. Hierzu hat sich, insbesondere für die Abtrennung von Ammoniumsalzen, eine Querstromfiltration bewährt, die so durchgeführt werden kann, dass die Leitfähigkeit der Dispersion bevorzugt kleiner als 5000 µS/cm, bevorzugt kleiner als 2000 µS/cm ist.

Nachfolgend kann das Reaktionsgemisch beispielsweise durch Verdampfen aufkonzentriert werden.

Der Feststoffanteil der Dispersion, die der Sprühtrocknung zugeführt wird, beträgt bevorzugt 10 bis 50 Gew.-%, bezogen auf die Dispersion.

Die Sprühtrocknung wird bevorzugt bei Temperaturen von 100 bis 150°C durchgeführt.

Die einzelnen Behandlungsschritte können über einen Zeitraum von jeweils 0,5 bis 8 Stunden durchgeführt werden.

Ein weiterer Gegenstand der Erfindung ist ein oberflächenmodifiziertes Agglomerat von Indiumzinnoxid, welches nach dem erfindungsgemäßen Verfahren erhältlich ist.

Die Agglomerate weisen einen mittleren Aggregatdurchmesser von 5 bis 50 µm, bevorzugt 10 bis 25 µm, auf und lassen sich durch einfache Dispergierung überwiegend oder vollständig in Primärpartikel zerteilen.

Die BET-Oberfläche der Agglomerate von Indiumzinnoxid ist kleiner als die BET-Oberfläche der Agglomerate des Indium-Zinn-Oxohydrates aus dem sie erhalten werden. Bevorzugt beträgt die BET-Oberfläche 30 bis 100 m²/g und besonders bevorzugt 40 bis 80 m²/g.

Die kristallinen Bestandteile bestehen überwiegend oder vollständig aus kubischem Indiumzinnoxid. Darüber hinaus weisen die erfindungsgemäßen Agglomerate einen Kohlenstoffgehalt von 0,01 bis < 1 Gew.-%, bevorzugt 0,01 bis < 0,1 Gew.-% und besonders bevorzugt 0,02 bis 0,08 Gew.-% auf. Der Kohlenstoffgehalt der nach der Calcinierung erhaltenen Agglomerate ist niedriger als der Kohlenstoffgehalt der nach der Sprühtrocknung erhaltenen Agglomerate. Weiterhin wird davon ausgegangen, dass die chemische Zusammensetzung der Oberflächenmodifizierung nach der Calcinierung und der Sprühtrocknung unterschiedlich sind.

Das erfindungsgemäße oberflächenmodifizierte Agglomerat von Indiumzinnoxid und ein oder mehrere Lösungsmittel können zu einer Mischung vereinigt, die Mischung mittels eines Dispergieraggregates in eine Dispersion überführt und gegebenenfalls flüssige Bestandteile aus der Dispersion abgetrennt werden, um ein oberflächenmodifiziertes Pulver von Indiumzinnoxid zu erhalten.

Geeignete Dispergieraggregate können Mühlen, Kneter, Walzenstühlen, Hochenergiemühlen, bei denen zwei oder mehrere Vordispersionsströme bei Drucken von 1000 bis 4000 bar gegeneinander kollidieren. Insbesondere können Planetenkugelmühlen, Rührwerkskugelmühlen, Mörsermühlen und Dreiwalzenstühle eingesetzt werden. Die Dispergierung mittels Ultraschall ist ebenfalls geeignet.

Die Dispergierung wird unter Zusatz eines oder mehrerer Lösungsmittel durchgeführt. Geeignete Lösungsmittel können sein
- Wasser;
- Alkohole, wie z. B. Methanol, Ethanol, n-und i-Propanol und Butanol);
- Glycole und Glycolether, beispielsweise Ethylen-, Propylen- oder Butylenglycol, die entsprechenden Di-, Tri-, Tetra-, Penta-oder Hexamere, sowie die entsprechenden Mono- oder Diether, wobei eine oder beide Hydroxygruppen durch beispielsweise eine Methoxy, Ethoxy, Propoxy oder Butoxygruppe ersetzt sind;
- Ketone, wie z. B. Aceton und Butanon;
- Ester, wie z. B. Essigsäureethylester;
- Ether, wie z. B. Diethylether, Tetrahydrofuran und Tetrahydropyran;
- Amide, wie beispielsweise Dimethylacetamid und Dimethylformamid;
- Sulfoxide und Sulfone, wie beispielsweise Sulfolan und Dimethylsulfoxid;
- aliphatische (gegebenenfalls halogenierte) Kohlenwasserstoffe, wie beispielsweise Pentan, Hexan und Cyclohexan;
- Polyole, beispielsweise 2-Methyl- 2,4-pentandiol;
- Polyethylenglycole und deren Ether, wie Diethylenglycol, Triethylenglycol, Tetraethylenglycol, Diethylenglycoldiethylether, Tetraethylenglycoldimethylether oder Diethylenglycolmonobutylether;
- Ethylenglycol, Diethylenglycol und Diethylenglycolmonobutylether werden bevorzugt eingesetzt.

Es können auch Mischungen derartiger Lösungsmittel eingesetzt werden.

Zur Dispergierung können bevorzugt Lösungsmittel eingesetzt werden, deren Verdunstungszahl bevorzugt 100 oder mehr, besonders bevorzugt 100 bis 200 ist. Hierdurch können Lösemittelverluste während des Dispergierschrittes vermieden werden. Nach dem Dispergierschritt kann dann mit weiteren Lösungsmitteln, deren Verdunstungszahl weniger als 100, bevorzugt 10 bis 50, ist, verdünnt werden. Die Verdunstungszahl bezieht sich auf Diethylether, dessen Verdunstungszahl 1 ist.

Der Anteil des Lösungsmittels mit der Verdunstungszahl von 100 oder mehr beträgt bevorzugt 10 bis 80 Gew.-%, besonders bevorzugt 15 bis 60 Gew.-%, bezogen auf die Summe der Gewichtanteile von Indiumzinnoxid und Lösungsmittel mit einer Verdunstungszahl von 100 oder mehr.

Der Anteil der eingesetzten, oberflächenmodifizierten Agglomerate von Indiumzinnoxid beträgt vorzugsweise 20 bis 50 Gew.-%. Es hat sich gezeigt, dass insbesondere oberflächenmodifizierte Agglomerate von Indiumzinnoxid eingesetzt werden können, die in Gegenwart von Caprolactam gefällt wurden. Der Einsatz dieser Agglomerate führt zu einem Indiumzinnoxidpulver oder einer Dispersion daraus, die eine besonders hohe Leitfähigkeit aufweist.

Die Dispergierung kann weiterhin auch in Gegenwart ein oder mehrerer oberflächenmodifizierender Verbindungen erfolgen. Diese können die gleichen sein, die auch bereits bei der Fällung eingesetzt wurden. Bevorzugt können organische Carbonsäuren, Anhydride oder Säureamide eingesetzt werden. Besonders bevorzugt kann 3,6,9-Trioxadecansäure eingesetzt werden.

Die BET-Oberfläche des oberflächenmodifizierten Pulvers von Indiumzinnoxid ist im wesentlichen die gleiche wie die der Agglomerate von Indiumzinnoxid. Eine Verringerung der BET-Oberfläche durch die Dispergierbehandlung wird nicht beobachtet.

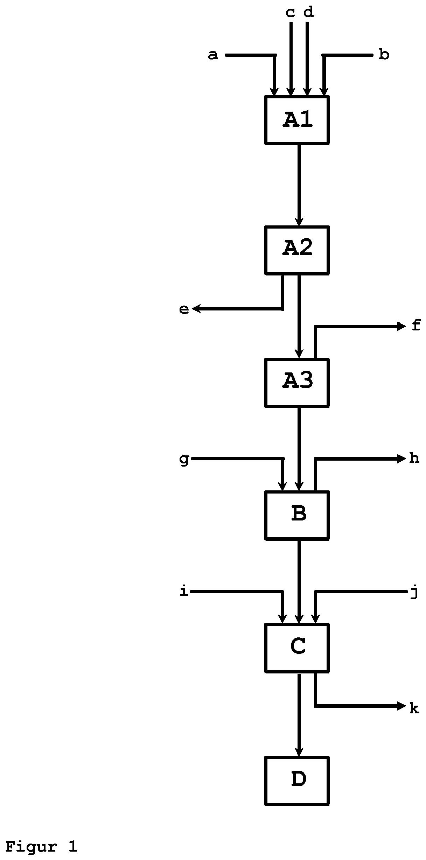

Figur 1 zeigt ein schematisches Fließbild für eine bevorzugte Ausführungsform umfassend die Verfahrensschritte
A1 = Fällung
A2 = Querstromfiltration
A3 = Sprühtrocknung
B = Trocknung und Calcinierung
C = Dispersionsherstellung (optional)
D = Abtrennung ITO-Pulver (optional) und den Einsatzstoffen und Reaktionsprodukten umfassend
a = Indiumchlorid
b = Zinnchlorid
c = Caprolactam
d = Ammoniumhydroxid
e = Ammoniumchlorid
f = vorwiegend Wasser
g = Formiergas
h = Abgas
i = Lösungsmittel
j = 3,6,9-Trioxadecansäure (optional)
k = flüssige Phase.

Ein weiterer Gegenstand der Erfindung ist eine Beschichtungsmasse oder Formmasse mit einem Oberflächenwiderstand von weniger als 1000 Ohm□, welche nach dem erfindungsgemäßen Verfahren erhältlich ist. Der ITO-Anteil in der Beschichtungsmasse kann bevorzugt 60 bis 85 Gew.-% betragen.

Die Beschichtungsmasse oder Formmasse kann erhalten werden, indem die erfindungsgemäßen Agglomerate von Indiumzinnoxid und/oder eine Dispersion von Indiumzinnoxid-Pulver und jeweils ein oder mehrere Bindemittel eingesetzt werden.

Der Anteil an Bindemittel, bezogen auf die getrocknete Beschichtungsmasse oder Formmasse, beträgt bevorzugt 10 bis 91 Gew.-% und besonders bevorzugt 40 bis 85 Gew.-%.

Unter getrockneter Beschichtungsmasse oder Formmasse ist die Masse ohne flüchtige Bestandteile zu verstehen. Die Trocknung erfolgt in der Regel bei Temperaturen von 20 bis 150°C.

Als Bindemittel können anorganische und organische Bindemittel eingesetzt werden. Geeignete Bindemittel sind beispielsweise Polyvinylharze, Polyolefine, PVC, Polyvinylalkohol, Polyvinylester, Polystyrol, Acrylharze, Acrylester, Alkydharze, Polyurethanlacke, Harnstoffharze, Melaminharze, Phenolharzlacke. Bevorzugt können Cellulose, Methylcellulose, Hydroxypropylcellulose, Nitrocellulose und Celluloseester eingesetzt werden.

Die Beschichtungsmasse oder Formmasse kann weiterhin auch nanoskalige anorganische Feststoffteilchen (Nanopartikel) enthalten. Die einsetzbaren Nanopartikel haben vorzugsweise einen mittleren Partikeldurchmesser von nicht mehr als 200 nm, bevorzugt von nicht mehr als 100 nm. Bevorzugt können nanoskalige Metalloxidpartikel wie beispielsweise Aluminiumoxid, Cadmiumoxid, Ceroxid, Eisenoxid, Kupferoxid, Molybdänoxid, Nioboxid, Siliciumdioxid, Tantaloxid, Titandioxid, Vanadiumoxid, Wolframoxid, Zinkoxid, Zinnoxid, Zirkonoxid und Mischoxide der vorgenannten Metalloxide. Weiterhin können die nanoskaligen Partikel in Form von Phosphaten, Silikaten, Zirkonaten, Aluminaten, Stannaten vorliegen.

Die Auftragung kann beispielsweise durch Drucken, Spindip-Coating, Rakeln, Tauchen Sprühen (Inkjet) erfolgen.

Die Beschichtungsmassen und Formmassen können in der Opto- und Mikroelektronik, für optisch transparente, IRblockierende oder leitfähige Beschichtungen Verwendung finden. Weiterhin können sie für Bestandteil von Siebdruckpasten, Flüssigkeitsdisplays, Elektrolumineszenz-Displays, Elektrochromie-Displays, transparenten leitfähigen Schichten, sein.

### Beispiele

### A) Agglomerate von oberflächenmodifizierten Indium-Zinn Oxohydraten (nicht erfindungsgemäß)

Beispiel A-1: 151,1 kg Indium(III)chlorid, 12,6 kg Zinn(IV)chlorid · 5 H₂0 und 6,25 kg Caprolactam werden in 460,4 kg Wasser gegeben und gerührt. Nachdem eine klare Lösung entstanden ist, wird diese auf 50°C erwärmt. Nachfolgend tropft man unter Rühren 122,8 kg Ammoniumhydroxidlösung (25%ig) zu. Die Suspension wird weitere 24 Stunden gerührt. Anschließend werden noch 208,52 kg Ammoniumhydroxidlösung hinzugefügt. Ammoniumchlorid wird durch Querstromfiltration abgetrennt: Permeatfluß 260 - 300 kg/m²h. Die Leitfähigkeit der Suspension beträgt 1018 µS/cm. Anschließend wird die flüssige Phase durch Sprühtrocknung abgetrennt. Hierzu werden 20 l/h der nach der Abtrennung von Ammoniumchlorid erhaltenen Suspension mit einem Feststoffgehalt von 9,6 Gew.-% mit Hilfe von 8 Nm³/h Luft in einen Trockner (Betriebstemperatur 300°C, Konustemperatur 110°C, Ablufttemperatur 115°C) verdüst. Es werden Agglomerate von Indium-Zinn-Oxohydrat mit den in Tabelle 1 gezeigten chemisch-physikalischen Werten erhalten.

Beispiel A-2: Analog Beispiel 1, jedoch unter Einsatz von 147,8 kg Indium(III)chlorid 176,4 kg Zinn(IV)chlorid· 5 H₂O und 6,25 kg Caprolactam.

Beispiel A-3: Analog Beispiel 1, jedoch unter Einsatz von 151,1 kg Indium(III)chlorid 12,6 kg Zinn(IV)chlorid· 5 H₂O und 6,25 kg ß-Alanin.

Es werden Agglomerate von Indium-Zinn-Oxohydrat mit den in Tabelle 1 gezeigten chemisch-physikalischen Werten erhalten.

**Tabelle 1: Agglomerate von Indium-Zinn-Oxohydrat**

| **Beispiel** | | **A-1** | **A-2** | **A-3** |
|---|---|---|---|---|
| Anteil In | Gew.-% | 94,96 | 92,17 | 94,96 |
| Anteil Sn | Gew.-% | 4,99 | 6,94 | 4,98 |
| Anteil C | Gew.-% | 0,042 | 0,089 | 0,056 |
| BET-Oberfläche¹⁾ | m²/g | 121 | 127 | 117 |
| Stampfdichte²⁾ | g/l | 684 | n.b. | n.b. |
| Trocknungsverlust³⁾ | Gew.-% | 4,4 | n.b. | n.b. |
| Glühverlust⁴⁾ | Gew.-% | 18,0 | n.b. | n.b. |
| d₅₀⁵⁾ | µm | 12,8 | 17,9 | 16,5 |
| pH-Wert⁶⁾ | | 5,4 | n.b. | n.b. |

| | | | | |
|---|---|---|---|---|
| 1)nach DIN 66131; 2) in Anlehnung an DIN EN ISO 787/11, Aug. 1983; 3) 2 h bei 105 °C; 4) 2 Stunden bei 1000°C ; 5)Cilas d₅₀ Wert; 6) 4 prozentige Dispersion in Wasser | | | | |

### B) Agglomerate von oberflächenmodifiziertem Indiumzinnoxid (erfindungsgemäß)

Beispiel B-1a: Die Agglomerate aus Beispiel A1 werden zunächst bei 300°C über einen Zeitraum von 1 h an der Luft getrocknet und nachfolgend in einem Ofen bei einer Temperatur von 300°C über einen Zeitraum von 1 h in einer Formiergasatmosphäre gehalten.

Beispiel B-1b: Die Agglomerate aus Beispiel A1 werden zunächst bei 300°C über einen Zeitraum von 1 h an der Luft getrocknet und nachfolgend in einem Ofen bei einer Temperatur von 250°C über einen Zeitraum von 1 h in einer Formiergasatmosphäre gehalten. Nach dem Abkühlen auf Raumtemperatur wird der Feststoff bei Raumtemperatur über einen Zeitraum von 8 h an der Luft gelagert und nachfolgend bei einer Temperatur von 275°C über einen Zeitraum von 1 h in einer Formiergasatmosphäre gehalten.

Beispiel B2: Durchführung analog Beispiel B-1b, jedoch unter Einsatz der Agglomerate aus Beispiel A2.

Die physikalisch-chemischen Werte der aus den Beispielen B-1a, B-1b und B-2 erhalten Agglomerate von Indiumzinnoxid sind in Tabelle 2 gezeigt.

**Tabelle 2: Agglomerate von Indiumzinnoxid**

| **Beispiel** | | **B-1a** | **B-1b** | **B-2** |
|---|---|---|---|---|
| Anteil In | Gew.-% | 94,98 | 94,98 | 94,98 |
| Anteil Sn | Gew.-% | 4,99 | 4,99 | 4,99 |
| Anteil C | Gew.-% | 0,029 | 0,025 | 0,016 |
| Kristallphase | | In₂O₃ kubisch | | |
| BET-Oberfläche⁾ | m²/g | 45 | 68 | 78 |
| Pulverleitfähigkeit | Ohm·cm | 3 | 1 | 1,2 |
| Stampfdichte | g/l | 982 | 1035 | 1075 |
| Trocknungsverlust | Gew.-% | 0,91 | 0,73 | 0,32 |
| Glühverlust | Gew.-% | 0,94 | 1,00 | 0,94 |
| d₅₀ | µm | 47 | 19 | 23 |
| pH-Wert | | 3,6 | 4,1 | 3,9 |
| Farbwerte x/y | | 0,306/0,348 | 0,309/0,339 | 0,308/0,350 |

### C) Dispersion von oberflächenmodifiziertem Indiumzinnoxid-Partikeln (nicht erfindungsgemäß)

Beispiel C-1b-a: 100 g der Agglomerate von Indiumzinnoxid aus Beispiel B-1b werden in 48 g Ethylenglycol suspendiert und auf einem Dreiwalzenstuhl über einen Zeitraum von 20 min vermahlen. Die Agglomerate sind leicht zerteilbar. Die oberflächenmodifizierten Indiumzinnoxid-Partikel weisen einen mittels Laserbeugung in einer 1 prozentigen Dispersion ermittelten d₅₀-Wert von 60 nm und einen d₉₀-Wert von 105 nm auf.

Beispiel C-1b-b: 100 g der Agglomerate von Indiumzinnoxid aus Beispiel B-1b werden in 34 g Dowanol PPH und 3,1 g 3,6,9-Trioxadecansäure suspendiert und auf einem Dreiwalzenstuhl über einen Zeitraum von 20 min vermahlen. Die oberflächenmodifizierten Indiumzinnoxid-Partikel weisen einen mittels Laserbeugung in einer 1 prozentigen Dispersion ermittelten d₅₀-Wert von 65 nm und einen d₉₀-Wert von 108 nm auf.

Beispiel C-2-b: analog Beispiel C-1b-b, jedoch unter Einsatz von Agglomeraten von Indiumzinnoxid aus Beispiel B-2. Die oberflächenmodifizierten Indiumzinnoxid-Partikel weisen einen mittels Laserbeugung in einer 1 prozentigen Dispersion ermittelten d₅₀-Wert von 65 nm und einen d₉₀-Wert von 110 nm auf.

Beispiel C-1b-c: 40,00 g der Agglomerate von Indiumzinnoxid aus Beispiel B-1b werden in einem Gemisch aus 49,04 g Diacetonalkohol, 10,00 g Butylethoxyethylacetat und 0,96 g 3,6,9-Trioxadecansäure suspendiert und auf einem Dreiwalzenstuhl über einen Zeitraum von 20 min vermahlen.

Beispiel C-2-c: Analog Beispiel C-1b-c, jedoch unter Verwendung der Agglomerate von Indiumzinnoxid aus Beispiel B-2.

### D) Beschichtungsmassen

### Beispiel D-1b-c (erfindungsgemäß):

Die Beschichtungsmasse wird durch Mischen von gewichtsgleichen Anteilen der Dispersion aus Beispiel C-1b-c mit einer Lösung aus 17 Gewichtanteilen Nitrocellulose und 83 Gewichtsanteilen Diacetonalkohol erhalten.

### Beispiel D-2-c (erfindungsgemäß):

analog Beispiel D-1b-c, jedoch unter Verwendung der Dispersion aus Beispiel C-2-c.

Vergleichsbeispiel: analog Beispiel D-1b-c, jedoch unter Verwendung einer Dispersion, die ein in EP-A-1113992, Beispiel 1b, offenbartes Indiumzinnoxidpulver nach der Formierung enthält. Analog Beispiel C-1b-c wird unter Verwendung dieses Pulvers eine Dispersion hergestellt.

Die Beschichtungmassen aus den Beispielen D-1b-c und D-2-b, sowie aus dem Vergleichsbeispiel werden auf Glas und PET aufgebracht und bei 120°C für 1 h ausgehärtet. Der ITO-Anteil im flüssigen Lack beträgt jeweils 28 Gew.-%, im festen Lack 82,5 Gew.-%. Der Anteil an Bindemittel im flüssigen Lack beträgt jeweils 6 Gew.-%, im festen Lack 17,5 Gew.-%. Die Nassfilmdicke beträgt jeweils 50 µm, die Trockenfilmdicke 5,1 µm.

**Tabelle 3: Oberflächenwiderstände auf Glas und PET**

| | | **Gemäß Erfindung** | | | | **Vergleich** | |
|---|---|---|---|---|---|---|---|
| Beispiel | | D-1b-c | | D-2-c | | | |
| Substrat | | Glas | PET | Glas | PET | Glas | PET |
| Widerstand | Ohm□ | 394 | 460 | 750 | 780 | 1900 | 2255 |

Die mit den erfindungsgemäßen Agglomeraten von Indiumzinnoxid hergestellten beschichteten Substrate weisen einen deutlich niedrigeren Oberflächenwiderstand auf, als solche Substrate die mit Indiumzinnoxid nach dem Stand der Technik beschichtet wurden.

## Patentansprüche

1. Verfahren zur Herstellung eines oberflächenmodifizierten Agglomerates von Indiumzinnoxid, bei dem man
a) eine wässerige Lösung, welche Indium- und Zinn-Verbindungen und ein oder mehrere oberflächenmodifizierende Komponenten enthält, auf einen pH-Wert von 3,5 bis 4,5 einstellt, von gelösten Reaktionsprodukten und nicht umgesetzten Einsatzstoffen des Reaktionsgemisches abtrennt und die erhaltene Dispersion einer Sprühtrocknung unterzieht,
wobei die oberflächenmodifizierende Komponenten aus der Gruppe bestehend aus
a1) einer gesättigten oder ungesättigten Monocarbonsäure und Polycarbonsäure mit 1 bis 24 Kohlenstoffatomen,
a2) einem Monoamin der allgemeinen Formel R₃₋ₙNHₙ, worin n = 0, 1 oder 2 ist und die Reste R unabhängig voneinander Alkylgruppen mit 1 bis 12 Kohlenstoffatomen darstellen,
a3) Caprolactam, ß-Alanin, Glycin, Valin, Aminocapronsäure, Leucin und Isoleucin ausgewählt wird und
b) das erhaltene Produkt bei Temperaturen von mehr als 150°C und weniger als 310°C an der Luft trocknet und nachfolgend unter reduzierenden Bedingungen calciniert, wobei man die Calcinierung
b1) zunächst bei Temperaturen von 240°C bis 260°C unter reduzierenden Bedingungen durchführt,
b2) das Agglomerat auf Raumtemperatur abkühlt, an der Luft lagert und nachfolgend
b3) bei Temperaturen von 270°C bis 310°C unter reduzierenden Bedingungen behandelt.

2. Verfahren nach Anspruch 1, dadurch gekenzeichnet, das die oberflächenmodifizierende Komponente aus der Gruppe bestehend aus 3,6,9-Trioxadecansäure, ß-Alanin und Caprolactam ausgewählt wird.

3. Oberflächenmodifiziertes Agglomerat von Indiumzinnoxid erhältlich nach dem Verfahren gemäß Anspruch 1 oder 2.

4. Beschichtungsmasse oder Formmasse mit einem Oberflächenwiderstand von weniger als 1000 Ohm□ erhältlich indem man die oberflächenmodifizierten Agglomerate von Indiumzinnoxid gemäß des Anspruches 3 und ein oder mehrere Bindemittel einsetzt.

## Claims

1. Process for producing a surface-modified agglomerate of indium tin oxide, in which
a) an aqueous solution containing indium compounds and tin compounds and one or more surface-modifying components, adjusted to a pH of 3.5 to 4.5, is separated from dissolved reaction products and unconverted feedstocks of the reaction mixture and the resulting dispersion is subjected to spray-drying,
wherein the surface-modifying component is selected from the group consisting of
a1) a saturated or unsaturated monocarboxylic acid and polycarboxylic acid having 1 to 24 carbon atoms,
a2) a monoamine of the general formula R₃₋ₙNHₙ in which n = 0, 1 or 2 and the R radicals are independently alkyl groups having 1 to 12 carbon atoms,
a3) caprolactam, β-alanine, glycine, valine, aminocaproic acid, leucine and isoleucine, and
b) the product obtained is dried under air at temperatures of more than 150°C and less than 310°C and is then calcined under reducing conditions, wherein the calcination
b1) is first conducted at temperatures of 240°C to 260°C under reducing conditions,
b2) the agglomerate is cooled to room temperature, stored under air and then
b3) treated at temperatures of 270°C to 310°C under reducing conditions.

2. Process according to Claim 1, **characterized in that** the surface-modifying component is selected from the group consisting of 3,6,9-trioxadecanoic acid, β-alanine and caprolactam.

3. Surface-modified agglomerate of indium tin oxide obtainable by the process according to Claim 1 or 2.

4. Coating material or moulding material with a surface resistivity of less than 1000 Ohm□, obtainable by using the surface-modified agglomerates of indium tin oxide according to Claim 3 and one or more binders.

## Revendications

1. Procédé pour la préparation d'un agglomérat, modifié en surface, d'oxyde d'indium et d'étain, dans lequel
a) on règle une solution aqueuse, qui contient des composés d'indium et d'étain et un ou plusieurs composants de modification de surface, à un pH de 3,5 à 4,5, on la sépare de produits de réaction dissous et de matières premières non transformées du mélange réactionnel et on soumet la dispersion obtenue à un séchage par pulvérisation, les composants de modification de surface étant choisis dans le groupe constitué par
a1) un acide monocarboxylique et polycarboxylique saturé ou insaturé comprenant 1 à 24 atomes de carbone,
a2) une monoamine de formule générale R₃₋ₙNHₙ, dans laquelle n = 0, 1 ou 2 et les radicaux R représentent, indépendamment les uns des autres, des groupes alkyle comprenant 1 à 12 atomes de carbone,
a3) le caprolactame, la ß-alanine, la glycine, la valine, l'acide aminocaproïque, la leucine et l'isoleucine et
b) on sèche le produit obtenu à des températures supérieures à 150°C et inférieures à 310°C à l'air et on le calcine ensuite dans des conditions réductrices,
b1) la calcination étant d'abord réalisée à des températures de 240°C à 260°C dans des conditions réductrices
b2) l'agglomérat étant refroidi à température ambiante, entreposé à l'air et ensuite
b3) traité dans des conditions réductrices à des températures de 270°C à 310°C.

2. Procédé selon la revendication 1, **caractérisé en ce que** le composant de modification de surface est choisi dans le groupe constitué par l'acide 3,6,9-trioxadécanoïque, la ß-alanine et le caprolactame.

3. Agglomérat modifié en surface d'oxyde d'indium et d'étain pouvant être obtenu selon le procédé selon la revendication 1 ou 2.

4. Masse de revêtement ou masse de moulage présentant une résistance de surface inférieure à 1000 Ohm□, pouvant être obtenue en ce qu'on utilise les agglomérats modifiés en surface d'oxyde d'indium et d'étain selon la revendication 3 et un ou plusieurs liants.
